Europäisches Patentamt

(19) **European Patent Office**

**Office européen des brevets**

(11) Numéro de publication: **0 205 150**

**B1**

(12) **FASCICULE DE BREVET EUROPEEN**

(45) Date de publication du fascicule du brevet: **05.09.90**

(51) Int. Cl.⁵: **H 04 L 7/02**

(21) Numéro de dépôt: **86107875.6**

(22) Date de dépôt: **10.06.86**

(54) **Procédé et dispositif de reduction de gigue d'un train numérique synchrone en vue de la récupération de son rythme.**

(30) Priorité: **10.06.85 FR 8508742**

(43) Date de publication de la demande:
**17.12.86 Bulletin 86/51**

(45) Mention de la délivrance du brevet:
**05.09.90 Bulletin 90/36**

(84) Etats contractants désignés:
**DE FR GB IT NL SE**

(56) Documents cités:
**EP-A-0 121 750**
**DE-A-3 332 939**
**US-A-3 629 712**

(73) Titulaire: **ALCATEL CIT**
**12 Rue de la Baume**
**F-75008 Paris (FR)**

(72) Inventeur: **Paul, Philippe**
**Kastel Kerguiniou Ploubezre**
**F-22300 Lannion (FR)**

(74) Mandataire: **Weinmiller, Jürgen et al**
**Lennéstrasse 9 Postfach 24**
**D-8133 Feldafing (DE)**

Courier Press, Leamington Spa, England.

EP 0 205 150 B1

**Description**

La présente invention concerne la récupération du rythme d'un train numérique synchrone et plus particulièrement la réduction des effets de la gigue du train numérique sur son signal de rythme récupéré.

Un train numérique synchrone en bande de base se présente sous la forme d'une succession de moments de même durée définie par un signal de rythme, qui sont séparés par des transitions et au cours desquels le signal garde un niveau constant choisi parmi plusieurs valeurs discrètes. La superposition des différents moments réalise un motif géométrique connu sous le nom de diagramme de l'oeil. Les limitations en fréquence du canal utilisé pour la transmission déforment le train numérique en commençant par ses transitions ce qui se traduit par une fermeture plus ou moins prononcée du diagramme de l'oeil.

A la réception, les moments sont reconnus par un échantillonnage de leur partie médiane qui est la moins altérée par la transmission car la plus éloignée des transitions et qui correspond au milieu du diagramme de l'oeil.

L'échantillonnage des moments du signal en vue de leur reconnaissance présuppose la récupération du rythme du train numérique qui est faite à partir des transitions de ce dernier soit par simple filtrage lorsque le code de transmission le permet soit par traitement non linéaire et filtrage lorsque le signal de rythme n'est accessible dans le train numérique que par ses sous-harmoniques.

Le traitement non linéaire, par exemple un simple redressement dans le cas du code HDB 3, ne sera pas détaillé car sa nécessité et sa définition sont fonctions du code utilisé en font partie des connaissances de l'homme de métier.

Le filtrage, réalisé à l'aide de filtre passif ou d'oscillateur à boucle de verrouillage de phase, est suivi ou comporte un réglage de la phase du signal de rythme permettant de centrer les instants d'échantillonnage des moments au milieu du diagramme de l'oeil et d'avoir ainsi la meilleure immunité vis-à-vis des distortions de transmission.

La gigue ou modulation de phase parasite qui écarte les transitions du train numérique de leurs positions normales affecte le signal de rythme et, par voie de conséquence, la précision des instants d'échantillonnage des moments du train numérique ce qui augmente la sensibilité de la détection aux distorsions de transmission.

Pour limiter cet inconvénient, il est connu d'atténuer l'effet de la gigue du train numérique sur le signal de rythme récupéré en réalisant un filtrage à grand coefficient de surtension grâce à des filtres à quartz, des filtres à onde de surface ou de volume ou des oscillateurs à quartz à boucle à verrouillage de phase qui sont relativement coûteux.

Il est par ailleures connu d'atténuer l'effect de la gigue d'un train numérique synchrone, une fois son signal de rythme récupéré et sans que cette récupération ne s'accompagne d'une atténuation de l'effet de gigue, en décalant dans le temps l'échantillonnage de ce train numérique lorsque cet échantillonnage se situe trop près des transitions de ce train numérique (DE—A—3 332 939).

Il est par ailleurs connue de récupérer le rythme d'un train numérique synchrone en ne prenant pas en compte les transitions reçues dans certains intervalles, non pour atténuer l'effet de la gigue, mais pour éviter des ambiguités de phase liées au code utilisé (EP—A—121 750).

Il est par ailleurs connu de récupérer le rythme d'un train numérique synchrone en prenant en compte un nombre égal de transitions positives et négatives de ce train numérique, de manière, non pas à atténuer les effets de gigue, mais à éviter les effets de bruit de phase asymétrique qui peuvent se produire lorsque seules des transitions d'un sens donné sont utilisées (US—A—3 629 712).

La présente invention a pour but l'atténuation de la sensibilité du rythme récupéré à la gigue du train numérique d'origine d'une manière différente, simple et peu coûteuse.

Elle a pour objet un procédé de réduction de la gigue d'un train numérique synchrone en vue de la récupération d'un signal de rythme de succession de ses moments, à l'aide d'un circuit de récupération de rythme procédant à partir d'une version du train numérique placé en bande de base affecté d'une gigue répartissant ses transitions au sein de plages de temps dites plages de gigue s'étendant entre deux moments consécutifs. Ce procédé consiste à déterminer à l'aide du signal de rythme récupéré une fenêtre temporelle chevauchant le début de chaque plage de gigue sans inclure leur fin et à imposer aux transitions appartenant à la version du train numérique destinée au circuit de récupération de rythme et apparaissant dans la fenêtre temporelle, des retards de durées fixes inférieures à l'amplitude maximale crête à crête de la gigue.

A la mise en route, le circuit de récupération de rythme engendre le signal de rythme à partir d'une version en bande de base du train numérique dont aucune des transitions n'est retardée. Une fois le signal de rythme établi, les transitions qui apparaissent dans la fenêtre temporelle sont retardées. Ces retards provoquent un retard de phase dans le signal de rythme récupéré et par conséquent un décalage de la fenêtre temporelle tendant à modifier le nombre de transitions sélectionnées par la fenêtre temporelle et à modifier dans le même sens le retard de phase du signal de rythme. Une analyse de fonctionnement montre que, en boucle ouverte, c'est-à-dire avec une fenêtre temporelle indépendante du train numérique incident, l'écart de phase moyen entre la version traitée du train numérique et la fenêtre temporelle est une fonction périodique continue donc décroissante par endroits de l'écart de phase moyen entre le fenêtre temporelle et la version non traitée du train numérique. Ceci permet l'atteinte en boucle fermée où l'écart de phase moyen entre la fenêtre temporelle et la version traitée du train numérique est une constante, d'une position d'équilibre stable qui est fonction de la valeur de cet écart. Dans la pratique, la position d'équilibre est ajustée en réglant la valeur de cet écart donc le déphasage du signal de rythme récupéré de façon à obtenir le rythme affecté de la gigue la plus faible possible.

La diminution de l'amplitude de gigue, provoquée par le repliement sur elles-mêmes de plages de gigue de la version du train numérique appliquée au circuit de récupération de rythme, provoque une diminution bien supérieure de la gigue affectant le signal de rythme récupéré en raison de la décorrélation des écarts de phase des moments successifs du train numérique.

Le repliement sur elles-mêmes de plages de gigue de la version du train numérique appliquée au circuit de récupération de rythme s'effectue avantageusement en définissant à partir du signal de rythme récupéré une fenêtre temporelle recouvrant la première moitié des plages de gigue et en retardant les transitions apparaissant au cours de cette fenêtre d'une durée fixe égale à la moitié de l'amplitude maximale crête à crête de la gigue.

Ce repliement peut également se faire par étapes successives, chaque étape consistant alors à déterminer à l'aide du signal de rythme récupéré une fenêtre temporelle chevauchant le début de chaque plage de gigue, sans inclure leur fin, de la version du train numérique destinée au circuit de récupération de rythme dans l'état où elle se trouve en début d'étape et à imposer aux transitions de cette dernière version apparaissant au cours de la fenêtre temporelle des retards de durées fixes inférieures à l'amplitude maximale crête à crête de sa gigue.

Les durées de retard des transitions choisies en fonction de l'amplitude maximale crête à crête de la gigue peuvent conduire à une amplification de la gigue dans les instants où elle prend de faibles valeurs. Aussi, en cas de gigue d'amplitude variable on adoptera avantageusement un procédé de réduction de gigue à étapes successives avec dans les premières étapes un choix de fenêtre temporelle s'étendant sur moins de la première moitié des plages de gigue par exemple sur le tiers évitant la prise en compte des transitions ayant une petite avance de phase due à une gigue faible et un choix d'une durée de retard inférieure à la moitié de l'amplitude maximale crête à crête de la gigue par exemple le tiers, et avec dans la dernière étape prévue pour la réduction de la gigue de faible amplitude à laquelle la gigue forte a été ramenée par étapes, un choix d'une fenêtre temporelle s'étendant sur la première moitié de la plage de gigue et d'une durée de retard égal à la moitié de l'amplitude maximale crête à crête de la gigue recontrée au cours de cette dernière étape.

L'invention a également pour objet des dispositifs de mise en oeuvre du procédé à l'aide circuits logiques facilement intégrables.

D'autres caractéristiques et avantages de l'invention ressortiront de la description ci-après de plusieurs modes de réalisations données à titre d'exemple. Cette description sera faite en regard du dessin dans lequel:

la figure 1 représente le schéma général d'un système de récupération de rythme incorporant un dispositif de réduction de gigue selon l'invention,

la figure 2 représente le schéma d'un dispositif de réduction de gigue selon l'invention à un seul étage, adapté pour traiter un signal binaire,

la figure 3 est un diagramme de temps illustrant la forme des signaux en divers points du dispositif de la figure 2,

la figure 4 représente la fonction de transfert entrée sortie de gigue du dispositif de la figure 2,

la figure 5 est un autre diagramme de temps illustrant les conséquences sur le diagramme de l'oeil des retards de transitions effectués sur un train numérique par le dispositif de la figure 2,

la figure 6 représente une variante à deux étages du dispositif de la figure 2 ayant une capacité de réduction de gigue accrue,

la figure 7 représente une variante à deux étages du dispositif de la figure 2 adaptée à un train numérique ayant une amplitude de gigue variable,

la figure 8 est un diagramme illustrant les effets sur le diagramme de l'oeil de retards de transition effectués en deux étapes sur le train numérique par le dispositif de la figure 7, et

la figure 9 est un diagramme de temps illustrant la forme des signaux en divers points du dispositif de la figure 7.

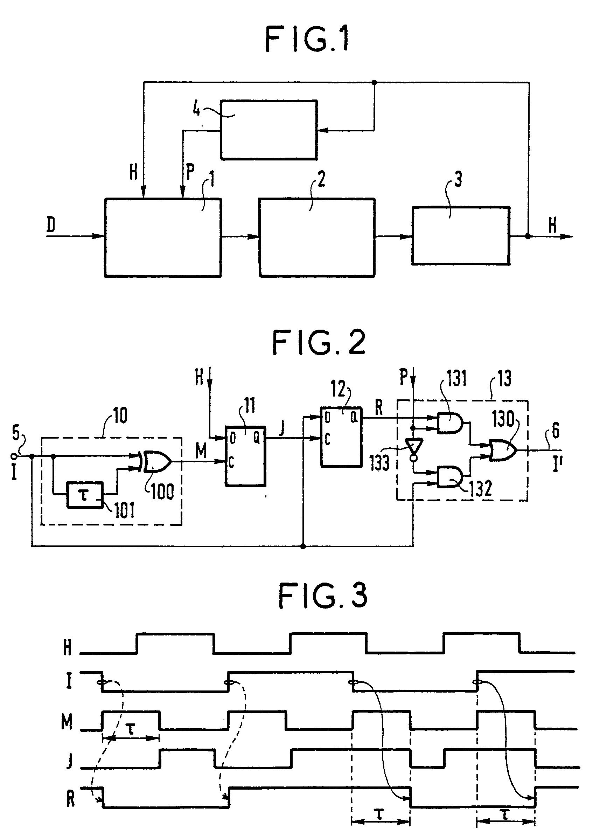

La figure 1 situe le dispositif réducteur de gigue selon l'invention par rapport au circuit de récupération de rythme d'un train numérique synchrone.

Le dispositif réducteur de gigue 1 s'intercale devant la partie filtre 2 du circuit de récupération de rythme qui est représentée indépendamment des moyens de réglage de phase de son signal de sortie illustrés séparément par un déphaseur ajustable 3 et qui comporte soit un filtre passif soit un filtre actif avec oscillateur et boucle à verrouillage de phase. Il est cadencé par le signal de rythme récupéré H disponible en sortie du déphaseur ajustable 3 et contrôlé par un signal d'inhibition P délivré par un détecteur d'absence d'horloge 4 tant que le signal de rythme récupéré n'est pas établi. La détecteur d'absence d'horloge 4 est soit un détecteur d'enveloppe si la partie filtre 2 est un circuit de filtrage passif soit un détecteur d'accrochage si la partie filtre est un oscillateur à boucle à verrouillage de phase.

En l'absence d'un signal de rythme récupéré établi H, le dispositif réducteur de gigue 1 est inhibé et délivre en sortie le signal applique à son entrée.

En présence d'un signal de rythme récupéré établi H, le dispositif réducteur de gigue 1 définit une fenêtre temporelle chevauchant le début de chaque plage de gigue sans inclure leur fin au moyen du signal de rythme récupéré H, sélectionne dans le signal destiné à la partie filtre 2 du circuit de récupération de rythme les transitions apparaissant dans la fenêtre temporelle, transitions qui sont les plus précoces dans les plages de gigue, et retarde ces transitions d'un délai fixe inférieur à la durée des plages de gigue ce qui a pour effet de réduire par repliement la longueur de ces dernières.

La figure 2 détaille un mode de réalisation du dispositif réducteur de gigue prévu pour fonctionner avec un signal d'entrée I binaire extrait du train numérique en vue d'être appliqué à la partie filtre du circuit de récupération de rythme et avec une version H du signal de rythme récupéré rectangulaire symétrique présentant des fronts descendants aux instants théoriques d'apparition des transitions du train numérique.

Ce cas est assez général. Il peut se présenter notamment lorsque le signal appliqué à l'entrée de la partie filtre du circuit de récupération de rythme est le train numérique lui même codé en biphase ou résulte du redressement d'un train numérique codé en bipolaire.

On distingue en générateur d'impulsions 10 placé à l'entrée 5 du dispositif de réduction de gigue recevant le signal binaire I destiné à la partie filtre du circuit de récupération de rythme, un premier registre de type D 11, à entrée d'inhibition C recevant sur son entrée de données le signal de rythme récupéré H et sur son entrée d'inhibition les impulsions engendrées par le générateur d'impulsion 10, un deuxième registre de type D 12 à commande d'inibition recevant sur son entrée données le signal binaire I disponible sur l'entrée 5 du dispositif et sur son entrée d'inibition le signal J de la sortie Q du premier registre D 11, et un multiplexeur 13 à deux voies d'entrée et une sortie précédant la sortie 6 du dispositif de réduction de gigue qui délivre un signal binaire I', avec une voie d'entrée raccordée à l'entrée 5 du dispositif et l'autre voie d'entrée connectée à la sortie Q du deuxième registre de type D 12, et avec son entrée d'adressage recevant le signal d'inhibition P engendré par le détecteur d'absence d'horloge.

Le générateur d'impulsions 10 se compose d'une porte logique de type "ou exclusif" 100 à deux entrées raccordées à l'entrée 5 du dispositif réducteur de gigue l'une directement l'autre par l'intermédiaire d'un circuit à retard 101 déterminant par son délai τ la durée des impulsions. Il transforme en impulsions de durée τ toutes les transitions du signal I destiné à la partie filtre du circuit de récupération de rythme.

Le multiplexeur 13 se compose d'une porte logique de type "ou" à deux entrées 130 précédées chacune d'une porte logique "et" à deux entrées 131, 132 commandées en opposition par l'intermédiaire d'un inverseur 133 par le détecteur d'absence d'horloge.

En l'absence d'un signal de rythme établi, le signal I appliqué à l'entrée du dispositif de réduction de gigue est dérivé à la sortie 6 de ce dernier par le multiplexeur 13.

En présence d'un signal de rythme établi H, la phase de celui-ci est réglée au moyen du circuit de réglage de phase pour que son front descendant coïncide avec le milieu des plages de gigue du train numérique et son niveau haut est adopté pour définir la fenêtre temporelle au cours de laquelle les transitions du signal I destiné à la partie filtre du circuit de récupération de rythme seront retardées d'une durée τ égale à la moitié de la durée des plages de gigue.

Comme les plages de gigue sont également réparties entre la fin d'un moment du train numérique et le début du suivant, la fenêtre temporelle choisie recouvre les plages de gigue sur une durée τ correspondant à leur première moitié. Il en résulte que les transitions sélectionnées dans la première moitié des plages de gigue au moyen de la fenêtre temporelle sont repoussées en dehors de cette dernière par un retard de durée τ et que le signal de sortie du réducteur de gigue ne présente pas de transitions sur la durée de la fenêtre temporelle. Cette propriété permet de réaliser à la fois la sélection et le retard des transitions en faisant transiter le signal I destiné à la partie filtre du circuit de récupération de rythme par l'intermédiaire du deuxième registre de type D 12 bloqué sur des intervalles de temps correspondant à la fenêtre temporelle dont la fin est repoussée en dehors d'un délai τ après chaque transition du signal I. Le signal de blocage J définissant ces intervalles de temps dont le début correspond au début de fenêtre repoussé le cas échéant en fin d'un délai τ après chaque transition de signal I, est engendré par le premier registre de type D 11 dans lequel transite le signal de rythme récupéré H et qui est bloqué une durée τ après chaque transition du signal I par le signal M délivré par le générateur d'impulsion 10.

La figure 3 est un diagramme des temps illustrant les formes des signaux M de sortie du générateur d'impulsion 10, J de la sortie Q du premier registre de type D 11 et R de la sortie Q du deuxième registre de type D 12 en fonction des formes du signal de rythme récupéré H et du signal I d'entrée. On remarque sur ce diagramme la transmission sans retard des transitions du signal I apparaissant au cours d'un niveau bas du signal de rythme récupéré H et la transmission avec un retard τ des transitions du signal I apparaissant au cours d'un niveau haut du signal de rythme récupéré H.

Si le dispositif réducteur de gigue illustré dans la figure 2, prévu pour le traitement d'un train numérique dont l'amplitude maximale des plages de gigue ne dépasse pas 2τ, est utilisé pour le traitement d'un train numérique dont l'amplitude des plages de gigue est supérieure à 2τ, il ne retarde pas de la durée fixe τ les transitions les plus précoces, celles se produisant avec une avance d'une durée supérieure à τ sur les instants théoriques d'apparition des transitions. Ces transitions les plus précoces sont retardées de la durée de cette avance, c'est-à-dire mises en coïncidence avec les transitions descendantes du signal de rythme récupéré et ne servent donc pas à la récupération de rythme.

Une façon simple d'adapter le dispositif illustré dans la figure 2 pour permettre en cas de telle utilisation que même les transitions les plus précoces de son signal d'entrée soient retardées de la durée fixe τ choisie consiste à lui adjoindre un circuit de détection des transitions finales des

impulsions de durée $\tau$ délivrées par le générateur 10 servant au cours d'un niveau haut du signal de rythme récupéré H pour commander la remise à zéro du premier registre de type D 11 lors de chaque détection. Ce circuit de détection, non illustré, peut être réalisé à l'aide d'une porte ET à trois entrées recevant respectivement le signal de type récupéré H, le signal de sortie du générateur 10 à travers un inverseur et le signal de sortie du générateur 10 à travers un circuit à retard à faible retard, la sortie de cette porte ET étant connectée à une entrée de remise à zéro du premier registre de type D11.

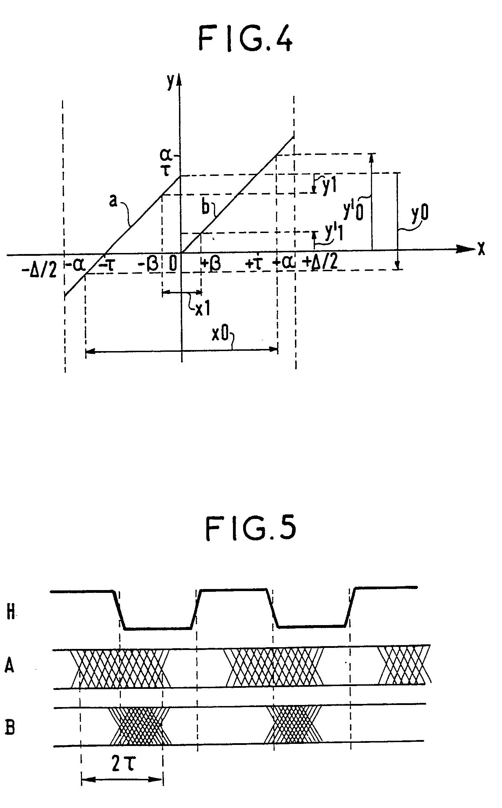

La réduction de l'amplitude de gigue obtenue entre les signaux d'entrée et de sortie du dispositif réducteur de gigue qui vient d'être décrit, avec l'adaptation mentionée pour une gigue d'entrée d'amplitude crête à crête supérieure à $2\tau$, peut être mise en évidence par l'étude de sa caractéristique de transfert de gigue entrée sortie illustrée à la figure 4.

Cette caractéristique a été tracée en centrant la plage de gigue d'entrée $x_0$, $x_1$ sur l'origine des axes. Elle se limite à une bande du plan d'abscisse inférieure en valeur absolue à $\pm\Delta/2$, $\Delta$ étant la période du signal de rythme ou la durée d'un moment du train numérique car l'on suppose que le train numérique reste reconnaissable, son diagramme de l'oeil conservant une certaine ouverture. Elle est constituée de deux segments de droite a, b disposés à 45° de l'axe des abscisses x, l'un a d'origine $(0, \tau)$ passant par le point $(-\tau\ 0)$, l'autre b d'origine $(00)$ passant par le point $(\tau, \tau)$. Ces deux segments distincts proviennent de choix de la fenêtre temporelle qui fait que les transitions en avance de la première moitié de la plage de gigue du signal d'entrée ne subissent pas le même traitement que les transitions en retard. Le segment a est relatif au transfert de la première moitié de la plage de gigue et traduit le fait que les transitions de cette première moitié subissent un retard uniforme de durée $\tau$ tandis que le segment b est relatif au transfert de la deuxième moitié de la plage de gigue et traduit le fait que les transitions de cette deuxième moitié ne sont pas retardées.

Pour une plage de gigue d'entrée $x_0$ d'amplitude $2\alpha$ supéieure à $2\tau$, le dispositif réducteur de gigue retarde uniformément d'une durée $\tau$ les transitions de sa première moitié $-\alpha$, 0 qui se retrouvent en sortie dans une plage de gigue $y_0$ située en $\tau-\alpha$, $\tau$ et laisse inchangées les transitions de sa deuxième moitié 0, $\alpha$ qui se retrouvent en sortie dans une plage de gigue $y'_0$ située en 0, $\alpha$. Les deux plages de gigue $y_0$ et $y'_0$ se recouvrent sur une durée $\tau$ tout en conservant chacune la moitié de l'amplitude de la gigue d'entrée de sorte que l'on retrouve en sortie une gigue globale dont l'amplitude a diminué de $\tau$.

Pour une plage de gigue d'entrée $x_1$ d'amplitude $2\beta$ inférieure à $2\tau$, le dispositif réducteur de gigue retarde uniformément d'une durée $\tau$ les transitions de sa première moitié $-\beta$, 0 qui se retrouvent en sortie dans une plage de gigue $y_1$ située en $\tau-\beta$, $\tau$ et laisse inchangées les transitions de sa deuxième moitié 0, $\beta$ qui se retrouvent en sortie dans une plage de gigue $y'_1$ située en 0, $\beta$. Les deux plages de gigue $y_1$, $y'_1$ ne se recouvrent plus sur une durée $\tau$ et l'on retrouve en sortie dans ce cas une gigue globale égale à $\tau$.

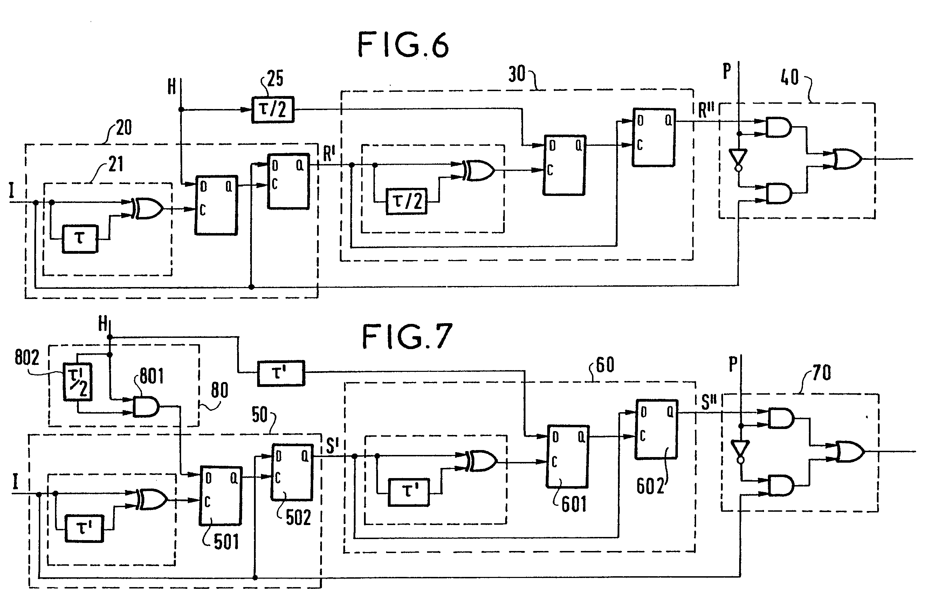

Le taux de réduction de gigue crête à crête passe donc par un maximum de 6 db lorsque de délai $\tau$ correspond à la demi-amplitude crête à crête de la gigue du signal d'entrée. Ce cas de figure est représenté sur le diagramme des temps de la figure 5 qui représente en H le signal de rythme récupéré, en A le diagramme de l'oeil du signal d'entrée du dispositif réducteur de gigue avec sa gigue d'amplitude $2\tau$ inférieure à la durée d'un moment du train numérique, et en B le diagramme de l'oeil du signal en sortie du dispositif réducteur de gigue.

Les transitions du signal d'entrée du dispositif réducteur de gigue situées dans la fenêtre temporelle définie par le niveau haut du signal de rythme récupéré appartiennent à la première moitié des plages de gigue puisque le front montant du signal de rythme récupéré est positionné au milieu du diagramme de l'oeil. Leur retardement d'une durée $\tau$ a pour effet de déplacer la première moitié des plages de gigue sur leur deuxième moitié et par conséquent de diviser par deux leur amplitude dans le signal de sortie du dispositif réducteur de gigue. Cette réduction de moitié de l'amplitude de gigue provoque une réduction bien supérieure de la gigue du signal de rythme récupéré en raison de la décorrélation apportée par les déplacements des transitions aux écarts de phase des moments successifs du train numérique.

Si la réduction de gigue obtenue n'est pas suffisante, il est possible de réitérer plusieurs fois l'opération en adoptant à chaque fois une valeur de retard moitié de la précédente et en appliquant également cette valeur de retard à la version utilisée du rythme récupéré afin de corriger le décentrage de ses fronts montants dû à la suppression systématique de la première moitié des plages de gigue.

La figure 6 illustre une variante en ce sens du dispositif de la figure 2. Cette variante comporte deux étages successifs 20, 30 de structures identiques déduites de celle de la figure 2 privée de son multiplexeur de sortie, et un multiplexeur de sortie 40.

Le signal de rythme récupéré H est comme précédemment adjusté pour avoir son front descendant au milieu des plages de gigue du signal d'entrée I.

Le premier étage 20 fonctionne directement à partir du signal de rythme récupéré H. Il présente un générateur d'impulsions de durée $\tau$ égale à la moitié de l'amplitude crête à crête maximale de la gigue du signal d'entrée I et délivre un signal de sortie R' présentant des plages de gigue amputée de leur première moitié ayant une amplitude maximale $\tau$ réduite de moitié.

Le deuxième étage 30 fonctionne à partir d'une version du signal de rythme retardée de $\tau/2$ par un circuit à retard 25 afin de recentrer son front montant par rapport au diagramme de l'oeil du signal de sortie R'. Il présente un générateur d'impulsions de durée τ/2 égale à la moitié de l'amplitude crête à crête de la gigue du signal R' qui lui est appliqué et délivre un signal de sortie R'' présentant des plages de gigue à nouveau amputées de leur première moitié ayant une amplitude maximale τ/2 ce qui donne un taux global de réduction de gigue crête à crête de quatre.

Le multiplexeur 40 placé en sortie est identique à celui 13 du dispositif de la figure 2 et permet comme ce dernier de remplacer le signal de sortie du dispositif réducteur de gigue par son signal d'entrée tant que le signal de rythme récupéré H n'est pas établi.

En revenant à la caractèristique de transfert de gigue illustrée à la figure 4 on s'aperçoit que le dispositif réducteur de gigue de la figure 2 présente l'inconvénient d'augmenter l'amplitude de gigue crête à crête lorsque celle-ci est faible, inférieure à τ. Il est possible d'atténuer cet inconvénient en procédant par étapes successives et en adoptant dans les premières étapes des fenêtres temporelles ne recouvrant qu'une faible portion du début des plages de gigue afin de ne traiter que les transitions ressortant d'une gigue de forte amplitude, cela jusqu'à ce que l'amplitude de la gigue forte ait été ramenée au niveau de celle de la gigue faible.

La figure 7 illustre un exemple de dispositif procédant à la réduction de la gigue en deux étapes successives, une première étape au cours de laquelle seules les transitions présentant une avance de phase relevant d'une gigue forte sont sélectionnées en adoptant une fenêtre temporelle recouvrant le premier tiers de chaque plage de gigue et retardées d'une durée τ' égale au tiers de l'amplitude maximale de la gigue, et une deuxième étape au cours de laquelle l'ensemble des transitions en avance de phase relevant soit d'une gigue faible soit d'une correction d'une avance de phase plus importante effectuée au cours de l'étape précédente sont sélectionnées en adoptant une fenêtre temporelle recouvrant la première moitié des plages de gigue réduites au cours de la première étape et retardées d'une durée τ' égale à la moitié de l'amplitude maximale crête à crête de la gigue réduite au cours de la première étape ou encore au tiers de l'amplitude maximale crêe à crête de la gigue initiale.

Ce dispositif présente une structure à deux étages 50, 60 identiques à celle du dispositif illustré précédemment à la figure 6 exception faite des différents circuits à retard qui n'ont pas les mêmes valeurs de retard, celles-ci étant toutes choisies égales à τ', et d'un circuit de formation de fenêtre 80 à partir du rythme récupéré H.

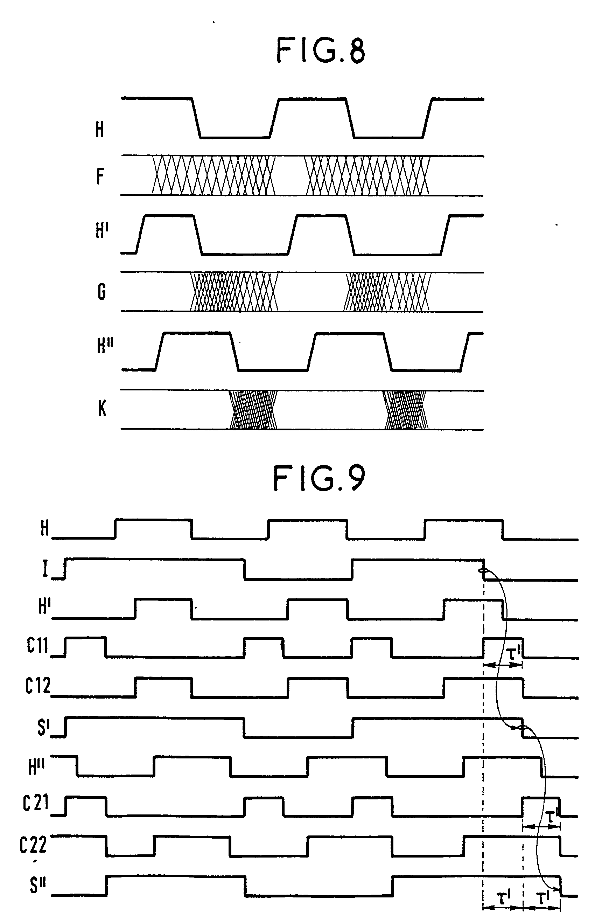

Le mode de fonctionnement de ce dispositif est illustré par le diagramme des temps de la figure 8 qui représente en H le signal de rythme récupéré H, en F le diagramme de l'oeil du signal I appliqué à l'entrée du dispositif, en H' le signal H' définissant la première fenêtre adoptée pour le premier étage 50, en G le diagramme de l'oeil du signal S' de sortie du premier étage 50, en H'' le signal H'' définissant la deuxième fenêtre adoptée pour le deuxième étage 60 et en K le diagramme de l'oeil du signal S'' de sortie du deuxième étage du dispositif.

Contrairement aux circuits précédents, la phase du signal de rythme récupéré H est ajustée de manière que le front descendant de celui-ci coïncide avec la fin non pas de la première moitié mais du premier tiers des plages de gigue du signal d'entrée I dont le diagramme de l'oeil est représenté en F.

Le circuit de formation de fenêtre 80 permet d'amener le front montant du signal H', dont le front descendant coïncide avec celui du signal H, au voisinage du milieu du diagramme de l'oeil du signal I de manière à définir une première fenêtre qui n'empiète pas sur la fin des plages de gigue. Il est inutile dans le cas où l'amplitude maximale crête à crête de la gigue du signal d'entrée I ne dépasse pas les trois quarts de la durée d'un moment du train numérique. Il est réalisé à l'aide d'une porte logique de type "et" à deux entrées 801 connectées à la sortie du circuit de récupération de rythme l'une directement, l'autre par l'intermédiaire d'un circuit à retard 802 de délai τ'/2.

Le premier étage 50 du dispositif sélectionne à l'aide du signal H' les transitions du signal d'entrée I situées dans le premier tiers des plages de gigue et les retarde de la durée τ' ce qui a pour effet de les reporter dans le deuxième tiers des plages de gigue et par conséquent d'amputer de leur premier tiers les plages de gigue du signal de sortie S' de ce premier étage dont le diagramme de l'oeil est représenté en G.

La version du signal de rythme récupéré H'' déduite du signal de rythme récupéré H retardé de τ' définit par son niveau haut une deuxième fenêtre empièant sur la précédente définie par le niveau haut du signal H' et incluant le deuxième tiers des plages de gigue du signal d'entrée I qui se trouve être la première moitié de plages de gigue du signal S' de sortie du premier étage 50.

Le deuxième étage 60 du dispositif sélectionne à l'aide du signal H'' les transitions du signal de sortie S' du premier étage situées dans la première moitié des plages de gigue de ce signal et les retarde de τ' ce qui a pour effet d'amputer de leur première moitié les plages de gigue du signal S' de sortie du premier étage 50 portant à trois le taux global de réduction de gigue crête à crête du dispositif.

On remarque que le premier étage n'agit pas dans le cas de gigue dont l'amplitude crête à crête ne dépasse pas τ' et que le dispositif de la figure 7 ne présente plus l'effet d'amplification des petites gigues rencontré avec le dispositif de la figure 2 ou avec le premier étage de celui de la figure 6.

Les diagrammes des temps de la figure 9 illustrent dans le détail le forme des signaux en différents points des deux étages du dispositif illustre à la figure 7. On distingue en H le signal de rythme récupéré, en I le signal binaire d'entrée dont l'amplitude de gigue est à réduire, en H' la version du signal de rythme appliquée à l'entrée données du premier registre de type D 501 du premier étage 50, en C 11 le signal à l'entrée d'inhibition de ce même registre de type D 501, en C 12 le signal disponible sur la sortie Q de ce registre de type D 501 appliqué sur l'entrée d'inhibition du deuxième registre de type D 502 du premier étage 50, en S' le signal de sortie du premier étage 50, en H'' la version du signal d'horloge appliquée à l'entrée données du premier registre de type D 601 du deuxième étage 60, en C 21 le signal à l'entrée d'inihibition de ce premier registre de type D 601, en C 22 le signal disponible à la sortie Q de ce registre de type D 601 appliqué sur l'entrée d'inhibition du deuxième registre de type D 602 du deuxième étage 60 et en S'' le signal à amplitude de gigue réduite disponible en sortie du deuxième étage 60.

On remarque sur cette figure les deux temps de retard $\tau'$ appliqués par le dispositif réducteur de gigue de la figure 7 aux transitions précoces du signal binaire appliqué à son entrée qui se trouvent dans la première fenêtre temporelle adoptée pour le premier étage 50. Pour les transitions moins précoces ne se trouvant que dans la deuxième fenêtre temporelle adoptée pour le deuxième étage 60 ce retard n'est plus que de $\tau'$ et il est nul pour celles tombant en dehors des deux fenêtres.

Le procédé de réduction de gigue qui vient d'être décrit est, comme le montrent les exemples de réalisation, mis en oeuvre à partir de circuits logiques intégrables.

**Revendications**

1. Procédé de réduction de la gigue d'un train numérique synchrone en vue de la récupération d'un signal de rythme de succession de ses moments, ledit signal de rythme étant engendré par un circuit de récupération de rythme opérant à partir d'une version du train numérique placé en bande de base affectée d'une gigue répartissant ses transitions au sein de plages de temps dites plages de gigue s'étendant entre deux moments consécutifs, ledit procédé étant caractérisé en ce qu'il consiste à déterminer à l'aide du signal de rythme récupéré une fenêtre temporelle chevauchant le début de chaque plage de gigue sans inclure leur fin et à imposer aux transitions appartenant à la version du train numérique destinée au circuit de récupération de rythme et apparaissant au cours de la fenêtre temporelle des retards de durées fixes inférieurs à l'amplitude maximale crête à crête de la gigue.

2. Procédé selon la revendication 1, caractérisé en ce qu'il comporte plusieurs étapes successives au cours desquelles la gigue affectant la version du train numérique destinée au circuit de récupération de rythme est progressivement réduite, chaque étape consistant à déterminer à l'aide du signal de rythme récupéré une fenêtre temporelle chevauchant le début de chaque plage de gigue, sans inclure leur fin, de la version du train numérique destinée au circuit de récupération de rythme dans son état en début d'étape et à imposer aux transitions de cette dernière version apparaissant au cours de la fenêtre temporelle des retards de durées fixes inférieurs à l'amplitude maximale crête à crête de sa gigue.

3. Procédé selon la revendication 1, caractérisé en ce que ladite fenêtre est déterminée de manière à recouvrir la première moitié des plages de gigue de la version du train numérique destinée au circuit de récupération de rythme et en ce que lesdites durées fixes de retard sont choisies égales à la moitié de l'amplitude maximale crête à crête de la gigue.

4. Procédé selon la revendication 1, caractérisé en ce que ladite fenêtre est déterminée de manière à recouvrir le premier tiers des plages de gigue de la version du train numérique destinée au circuit de récupération de rythme et en ce que lesdites durées fixes de retard sont choisies égales au tiers de l'amplitude maximale de la gigue.

5. Procédé selon la revendication 2, caractérisé en ce qu'il comporte deux étapes

une première étape au cours de laquelle on détermine à partir du signal de rythme récupéré une première fenêtre temporelle chevauchant le premier tiers de chaque plage de gigue de la version du train numérique destinée au circuit de récupération de rythme et où l'on impose aux transitions de ladite version apparaissant au cours de la première fenêtre temporelle des durées fixes de retard égales au tiers de l'amplitude maximale de la gigue affectant ladite version.

et une deuxième étape au cours de laquelle on détermine à partir du signal de rythme récupéré une deuxième fenêtre temporelle chevauchant la première moitié de chaque plage de gigue de la version du train numérique résultant de la mise en oeuvre de la première étape et où on impose aux transitions de cette dernière version apparaissant au cours de la deuxième fenêtre temporelle des durées fixes de retard égales à la moitié de l'amplitude maximale crête à crête de sa gigue.

6. Dispositif de réduction de la gigue d'un train numérique synchrone en vue de la récupération d'un signal de rythme de succession de ces moments, ledit signal de rythme étant engendré par un circuit de récupération de rythme avec une partie filtre (2) à laquelle est appliquée une version du train numérique placé en bande de base affectée d'une gigue qui répartit ses transitions au sein de plages de temps dites plage de gigue s'étendant entre deux moments consécutifs et se présentant sous la forme d'un signal rectangulaire symétrique dont l'un des niveaux dit premier niveau correspond à une fenêtre temporelle s'étendant sur la deuxième moitié de chaque moment, ledit dispositif étant caractérisé en ce qu'il comporte:

des moyens générateurs d'impulsions (10) transformant en impulsions les transitions de la version du train numérique destinée à la partie filtre (2) du circuit de récupération de rythme et appliquée à une entrée signal (D) du dispositif,

lesdites impulsions ayant une durée fixe inférieure à l'amplitude maximale crête à crête de la gigue affectant ladite version,

des premiers moyens retardateurs (11) recevant d'une entrée horloge du dispositif le signal de rythme récupéré (H) provenant du circuit de récupération de rythme et les impulsions engendrées par le générateur d'impulsions (10), et retardant les transitions du signal de rythme récupéré en fin des impulsions générateur d'impulsions (10)

des deuxièmes moyens retardateurs (12) recevant de l'entrée signal (D) du dispositif la version du train numérique destinée à la partie filtre du circuit de récupération de rythme et le signal de rythme avec ses transitions retardées par les premiers moyens retardateurs (11), et retardant les transitions de ladite version du train numérique en dehors des premiers niveaux du signal de rythme aux transitions retardées par les premiers moyens retardateurs (11)

et des moyens de multiplexage (13) placés en sortie du dispositif et permettant de remplacer sur cette dernière sortie le signal délivré par les deuxièmes moyens retardateurs (12) par la version du train numérique appliquée à l'entrée du dispositif tant que le signal de rythme n'est pas établi.

7. Dispositif selon la revendication 6 recevant un signal de rythme récupéré avec des transitions ajustées sur le milieu des plages de gigue de la version du train numérique destinée à la partie filtre du circuit de récupération de rythme et appliquée à son entrée, caractérisé en ce que les moyens générateurs d'impulsions (10) engendrent des impulsions de durée fixes égales à la moitié de l'amplitude maximale crête à crête de la gigue.

8. Dispositif selon la revendication 6 recevant un signal de rythme récupéré avec des transitions ajustées sur le premier tiers des plages de gigue de la version du train numérique destinée à la partie filtre du circuit de récupération de rythme et appliquée à son entrée, caractérisé en ce que les moyens générateurs d'impulsions engendrant des impulsions de durées fixes égales au tiers de l'amplitude maximale crête à crête de la gigue.

**Patentansprüche**

1. Verfahren zur Verringerung des Phasenrauschens einer synchronen Digitalimpulsfolge in Hinblick auf die Wiedergewinnung eines Digitaltaktsignals, das von einem Taktwiedergewinnungskreis erzeugt wird, der eine Fassung der digitalen Implusfolge im Basisband empfängt, wobei diese Fassung mit einem Phasenrauschen behaftet ist, das die Signalübergänge auf Zeiträume verteilt, die Phasenrausch-Zeiträume genannt werden und sich zwischen zwei aufeinanderfolgenden Signalperioden erstrecken, dadurch gekennzeichnet, daß das Verfahren darin besteht, mit Hilfe das wiedergewonnen Taktsignals ein zeitliches Fenster zu bestimmen, das den Beginn jedes Phasenrausch-Zeitraums überdeckt, aber nicht sein Ende, und die Übergänge der für den Taktwiedergewinnungskreis bestimmten Fassung der digitalen Impulfolge, die im Verlauf des Zeitfensters auftreten, um feste Zeiten zu verzögern, die geringer als die maximale Amplitude von Spitze zu Spitze des Phasenrauschens sind.

2. Verfahren nach Anspruch 1, dadurch gekennzeichnet, daß es aus mehreren aufeinanderfolgenden Schritten besteht, in denen des Phasenrauschen der für den Taktwiedergewinnungskreis bestimmten Fassung der digitalen Impulsfolge schrittweise verringert wird, wobei in jedem Schritt mit Hilfe des wiedergewonnen Taktsignals ein Zeitfenster bestimmt wird, das den Beginn jedes Phasenrauschzeitraums, aber nicht dessen Ende, in der für den Taktwiedergewinnungskreis bestimmten Fassung der digitalen Impulsfolge, wie sie zu Beginn dieses Schritts vorliegt, überdeckt, und wobei die während des Zeitfensters auftretenden Übergänge dieser letztgenannten Fassung um eine feste Zeit verzögert werden, die geringer als die Maximalamplitude von Spitze zu Spitze ihres Phasenrauschens ist.

3. Verfahren nach Anspruch 1, dadurch gekennzeichnet, daß das Fenster so festgelegt wird, daß es die erste Hälfte der Phasenrauschzeiträume der für den Taktwiedergewinnungskreis bestimmten Fassung der digitalen Impulsfolge überdeckt, und daß die festen Verzögerungszeiten gleich der Hälfte der Maximalamplitude von Spitze zu Spitze des Phasenrausches gewählt werden.

4. Verfahren nach Anspruch 1, dadurch gekennzeichnet, daß des Fenster so festgelegt wird, daß es das erste Drittel der Phasenrauschzeiträume der für den Taktwiedergewinnungskreis bestimmten Fassung der digitalen Impulsfolge überdeckt, und daß die festen Verzögerungszeiten gleich einem Drittel der Maximalamplitude des Phasenrauschens gewählt werden.

5. Verfahren nach Anspruch 2, dadurch gekennzeichnet, daß es zwei Verfahrensschritte aufweist, nämlich

einen ersten Verfahrensschritt, in dem ausgehend vom wiedergewonnenen Taktsignal ein erstes Zeitfenster bestimmt wird, das das erste Drittel jedes Phasenrauschzeitraums der für den Taktwiedergewinnungskreis bestimmten Fassung der digitalen Impulsfolge überdeckt, und in dem die während des ersten Zeitfensters auftretenden Übergänge dieser Fassung um feste Zeiten verzögert werden, die gleich einem Dritten der Maximalamplitude des Phasenrauschens dieser Fassung ist,

und einen zweiten Verfahrensschritt, in dem ausgehend vom wiedergewonnen Taktsignal ein zweites Zeitfenster bestimmt wird, das die erste Hälfte jedes Phasenrauschzeitraums derjenigen Fassung der digitalen Impulsfolge überdeckt, die aus der Anwendung des ersten Verfahrensschritts resultiert, und in dem die während des zweiten Zeitfensters auftretenden Übergänge dieser letzteren Fassung um feste Verzögerungszeiten gleich der Hälfte der Maximalamplitude von Spitze zu Spitze des Phasenrauschens verzögert werden.

6. Vorrichtung zur Verringerung des Phasenrauschens einer synchronen digitalen Impulsfolge in Hinblick auf die Wiedergewinnung eines Taktsignals für die Aufeinanderfolge seiner Signalperioden, wobei das Taktsignal von einem Taktsignal-Wiedergewinnungskreis mit einem Filterteil (2) erzeugt wird, an den eine Fassung der digitalen Impulsfolge im Basisband angelegt ist, wobei diese Fassung einem Phasenrauschen unterliegt, das die Übergänge auf einen Bereich von Zeitpunkten verteilt, der Phasenrauschzeitraum genannt wird und sich zwischen zwei aufeinanderfolgenden Signalperioden erstreckt und in Form eines symmetrischen Rechtecksignals vorliegt, dessen einer Pegel einem Zeitfenster entspricht, das sich über die zweite Hälfte jeder Signalperiode erstreckt, dadurch gekennzeichnet, daß die Vorrichtung aufweist

Impulserzeugungsmittel (10), die die Übergänge der für den Filterteil (2) des Taktwiedergewinnungskreises bestimmten und an einen Signaleingang (D) der Vorrichtung angelegten Fassung der digitalen Impulsfolge in Impulse verwandelt, die eine feste Dauer geringer als die Maximalamplitude von Spitze zu Spitze des diese Fassung betreffenden Phasenrauschens besitzen,

erste Verzögerungsmittel (11), die von einem Takteingang der Vorrichtung das im Taktweidergewinnungskreis wiedergewonnene Taktsignal (H) und die die vom Impulsgenerator (10) erzeugten Impulse zugeführt erhalten und die Übergänge des wiedergewonnen Taktsignals am Ende der Impulse des Impulsgenerators (10) verzögern,

zweite Verzögerungsmittel (12), die vom Signaleingang (D) der Vorrichtung die für den Filterteil des Taktwiedergewinnungskreises bestimmte Fassung der digitalen Impulsfolge sowie das Taktsignal mit seinen von den ersten Verzögerungsmitteln (11) verzögerten Übergängen zugeführt erhalten und die Übergänge dieser Fassung der digitalen Impulsefolge auf die von den ersten Verzögerungsmitteln (11) verzögerten Übergänge verzögert, solange das Taktsignal nicht den ersten Pegel besitzt,

und Multiplexiermittel (13) am Ausgang der Vorrichtung, die es erlauben, an diesem Ausgang das von den zweiten Verzögerungsmitteln (12) stammende Signal durch die an den Eingang der Vorrichtung angelegte Fassung der digitalen Impulsfolge zu ersetzen, solange das Taktsignal nicht wiedergewonnen ist.

7. Vorrichtung nach Anspruch 6, die ein wiedergewonnenes Taktsignal empfängt, dessen Übergänge auf die Mitte des Phasenrauschzeitraums der für den Filterteil des Taktwiedergewinnungskreises bestimmten und an den Eingang der Vorrichtung angelegten Fassung der digitalen Impulsfolge abgestimmt sind, dadurch gekennzeichnet, daß die Impulserzeugungsmittel (10) Impulse einer festen Dauer gleich der Hälfte der Maximalamplitude von Spitze zu Spitze des Phasenrauschens erzeugen.

8. Vorrichtung nach Anspruch 6, die ein wiedergewonnenes Taktsignal empfängt, dessen Übergänge auf das erste Dritten des Phasenrauschzeitraums der für den Filterteil des Taktwiedergewinnungskreises bestimmten und an den Eingang der Vorrichtung angelegten Fassung der digitalen Impulsfolge abgestimmt sind, dadurch gekennzeichnet, daß die Impulserzeugungsmittel Impulse einer festen Dauer gleich einem Drittel der Maximalamplitude von Spitze zu Spitze des Phasenrauschens erzeugen.

**Claims**

1. A method of reducing the jitter in a synchronous digital train for the purpose of recovering a bit rate signal defining the succession of periods in said train, said bit rate signal being generated by a bit rate recovery circuit operating on a version of the digital train placed in baseband and suffering from jitter which spreads its transitions over a time range referred to as the jitter range, which range extends between two consecutive periods of the digital train, characterized in that it consists in using the recovered bit rate signal to determine a time window which overlaps the beginning, but not the end, of the jitter range, and in causing those transitions in the version of the digital train intended for the bit rate recovery circuit which occur during the time window to be delayed by a fixed delay time shorter than the maximum peak-to-peak amplitude of the jitter.

2. A method according to Claim 1, characterized in that it includes a plurality of successive stages during which the jitter affecting the version of the digital train intended for the bit rate recovery circuit is reduced progressively, with each stage using the recovered bit rate signal to determine a time window which overlaps the beginning, but not the end, of each jitter range in the version of the digital train intended for the bit rate recovery circuit in the state in which it occurs at the beginning of the stage, and in imposing fixed duration delays on those transitions in said version which occur in said time windows, said fixed delay durations being shorter than the maximum peak-to-peak amplitude of the jitter at said stage.

3. A method according to Claim 1, characterized in that said window is determined in such a manner as to cover the first half of the jitter range in the version of the digital train intended for the bit rate recovery circuit, and that said fixed duration delay is chosen to be equal to one-half of the maximum peak-to-peak amplitude of the jitter.

4. A method according to Claim 1, characterized in that said window is determined in such a manner as to cover one-third of the jitter range of the version of the digital train intended for the bit rate recovery circuit, and that fixed delay duration is equal to one-third of the maximum amplitude of the jitter.

5. A method according to Claim 2, characterized in that it comprises two stages, namely:

a first stage during which the recovered bit rate signal is used to determine a first window overlapping the first third of each jitter range in the version of the digital train intended for the bit rate recovery circuit, and in which those transitions in said version which occur during said first time window are delayed by a fixed delay duration equal to one-third of the maximum amplitude of the jitter affecting said version; and

a second stage during which the recovered bit rate signal is used to determine a second time window overlapping the first half of each jitter range in the version of the digital train resulting from implementing the first stage, and wherein the transitions in said latter version which occur during the second time window are delayed by a fixed delay duration equal to one-half of the maximum peak-to-peak amplitude of its jitter.

6. An apparatus for reducing the jitter in a synchronous digital train for the purpose of recovering a bit rate signal defining the succession of periods in said train, said bit rate signal being generated by a bit rate recovery circuit including a filter portion (2) to which a version of the digital train placed in baseband is applied, said version being affected by jitter which spreads its transitions over a time range referred to as the jitter range which extends between two consecutive periods of the digital train, said recovered bit rate signal being in the form of a symmetrical rectangular signal having a first level which corresponds to a time window extending over the second half of each period, said apparatus comprising:

pulse generator means (10) transforming into pulses the transitions in the version of the digital train intended for the filter portion (2) of the bit rate recovery circuit as applied to a signal input (D) of said apparatus, said pulses being of fixed duration and shorter than the maximum peak-to-peak amplitude of the jitter affecting said version;

first delay means (11) having a first input connected to receive the recovered bit rate signal (H) from the bit rate recovery circuit and having a second input connected to receive the pulses generated by the pulse generator (10), and serving to delay the transitions in the recovered bit rate signal to the ends of the pulses from the pulse generator (10);

second delay means (12) connected to the signal input (D) of the apparatus to receive the version of the digital train intended for the filter portion of the bit rate recovery circuit and having a second input connected to receive the bit rate signal with transitions as delayed by the first delay means (11), and serving to delay the transitions in said version of the digital train so that they lie outside the first level periods of the bit rate signal whose transitions have been delayed by the first delay means (11);

and multiplexer means (13) at the output from the apparatus and serving to replace on said output the signal delivered by the second delay means (12) by the version of the digital train applied to the input of the apparatus so long as a bit rate signal has not been established.

7. An apparatus according to Claim 6, receiving a recovered bit rate signal with its transitions adjusted to the middle of the jitter range of the version of the digital train intended for the filter portion of the bit rate recovery circuit as applied to its input, characterized in that the pulse generator means (10) generate fixed duration pulses whose duration is equal to one half of the maximum peak-to-peak amplitude of the jitter.

8. An apparatus according to Claim 6, receiving a recovered bit rate signal with its transitions adjusted to the first third of the jitter range of the version of the digital train intended for the filter portion of the bit rate recovery circuit as applied to its input, characterized in that the pulse generator means (10) generate fixed duration pulses whose duration is equal to one third of the maximum peak-to-peak amplitude of the jitter.

# FIG.1

# FIG.2

# FIG.3

# FIG.4

# FIG.5

FIG.6

FIG.7

# FIG.8

# FIG.9